# EUROPÄISCHE PATENTSCHRIFT

(11) **EP 0 552 348 B1**
(45) Veröffentlichungstag und Bekanntmachung des Hinweises auf die Patenterteilung: **25.01.1995**
(21) Anmeldenummer: 92917014.0
(22) Anmeldetag: 09.08.1992
(51) Int. Cl.: E01C 19/28, B62D 51/00

(54) **SICHERHEITSVORRICHTUNG FÜR DEN FAHRANTRIEB VON VIBRATIONSWALZEN**
SAFETY DEVICE FOR THE TRAVELLING GEAR OF VIBRATORY ROLLERS
DISPOSITIF DE SECURITE POUR L'ORGANE DE TRANSLATION DE CYLINDRES VIBRANTS

(30) Priorität: 10.08.1991 DE 4126488
(43) Veröffentlichungstag der Anmeldung: 28.07.1993
(73) Patentinhaber: WACKER-WERKE GMBH & CO. KG, D-80809 München (DE)
(72) Erfinder: POLACEK, Manfred, D-8034 Germering (DE)
(74) Vertreter: Hieke, Kurt
(86) Internationale Anmeldenummer: EP9201815
(87) Internationale Veröffentlichungsnummer: WO9303226

(56) Entgegenhaltungen:
- EP-A- 0 053 215
- DE-C- 3 442 083

## Beschreibung

Die Erfindung bezieht sich auf eine Sicherheitsvorrichtung gemäß dem Oberbegriff des Patentanspruchs 1.

Sicherheitsvorrichtungen dieser Art sind aus der DE-C-34 42 083 bekannt.

Bei den bekannten Sicherheitsvorrichtungen besteht die Blockiervorrichtung in einer ersten Ausführungsform aus einer Sperrnase, die die Kupplungsvorrichtung mit dem Stellglied und dem Stellhebel formschlüssig mit einem ortsfesten Gehäuse verbindet, sobald sie von dem Bedienungsmann mittels des Sperrgriffs in die gesperrte Eingriffsstellung bewegt worden ist. In einer zweiten Ausführungsform besteht die Blockiervorrichtung aus einer Hirth-Verzahnung, von der ein Teil fest mit der Kupplungsvorrichtung und der andere Teil fest mit dem Gehäuse verbunden ist, wobei diese Teile bei der Verlagerung der Kupplungsvorrichtung mittels des Sperrgriffs durch den Bedienungsmann in die gesperrte Eingriffsstellung in Kontakt treten.

Bei Verwendung der erstgenannten, baulich besonders einfachen Ausführung muß der Bedienungsmann genau darauf achten, daß einerseits die normale Eingriffsstellung der Kupplung, andererseits aber nicht deren ausgerückte Stellung eingestellt wird, wenn er eine Veränderung am Fahrantrieb vornehmen will. Diese Schwierigkeit vermeidet die oben an zweiter Stelle genannte Blockiervorrichtung mit der Hirth-Verzahnung, weil der Bedienungsmann den Stellhebel im eingekuppelten Zustand der Kupplung mit einem etwas erhöhten Kraftaufwand bewegen kann, wenn er die Kraft, mit der er den Sperrgriff 4 in der Freistellung hochhält, etwas nachläßt. Die zweite Ausführung ist aber insofern nachteilig, als sie einen erhöhten Bauaufwand erfordert und nur eine stufenweise Veränderung am Fahrantrieb zuläßt.

Aufgabe der Erfindung ist es, eine Sicherheitsvorrichtung gemäß dem Oberbegriff des Patentanspruchs 1 zu schaffen, die sich sowohl durch eine einfache Konstruktion als auch durch die Möglichkeit einer stufenlosen Veränderbarkeit des Fahrantriebs auszeichnet.

Die vorstehende Aufgabe wird durch die Kennzeichnenden Merkmale des Patentanspruchs 1 gelöst.

Bei der erfindungsgemäßen Sicherheitsvorrichtung braucht der Bedienungsmann ebenso, wie bei den bekannten Sicherheitsvorrichtung mit einer Hirth-Verzahnung als Blockiervorrichtung nur etwas die Kraft nachzulassen, mit der er den Sperrgriff in der Freistellung hochhält, wenn er den Stellhebel im eingekuppelten Zustand der Kupplungsvorrichtung zur Veränderung des Fahrantriebs bewegen will, und er kann diesen dann, anders als bei der bekannten Sicherheitsvorrichtung, stufenlos verstellen. Es genügt schon eine kleine Freigabebewegung des Sperrgriffs, um den Stellhebel mit einem mäßigen Kraftaufwand bewegen zu können. Zudem ist die Blockiervorrichtung bei der erfindungsgemäßen Sicherheitsvorrichtung baulich wesentlich einfacher als bei der bekannten Sicherheitsvorrichtung mit der Hirth-Verzahnung.

Die Erfindung wird nachstehend anhand der Zeichnung an einem Ausführungsbeispiel nähcer erläutert.

In der Zeichnung zeigt:
- Fig.1: die Sicherheitsvorrichtung im Längsschnitt von der Seite gesehen,
- Fig.2: die Draufsicht auf die Sicherheitsvorrichtung nach Fig. 1,
- Fig.3: den Sperrgriff in Verbindung mit einem Führungsgriff am Ende einer Führungsdeichsel für die Walze in der Sperrstellung von der Seite gesehen, und
- Fig.4: die Draufsicht zu Fig. 3.

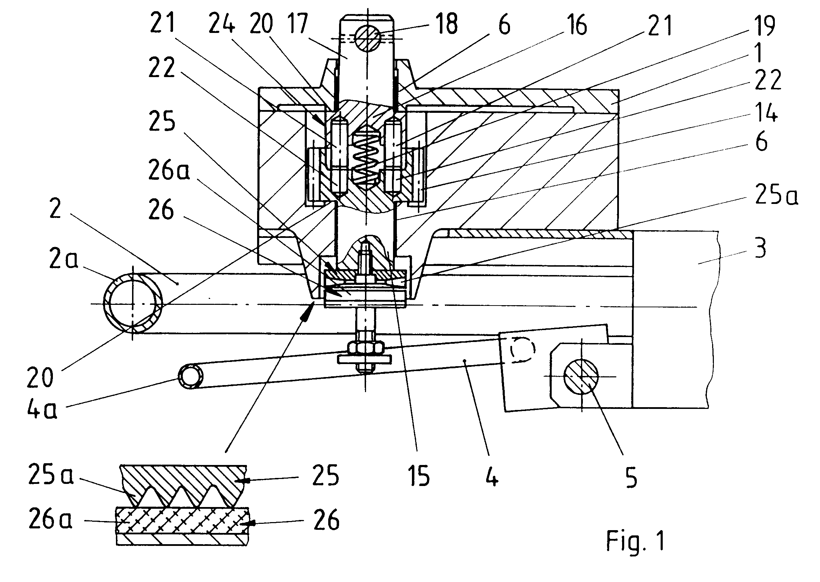

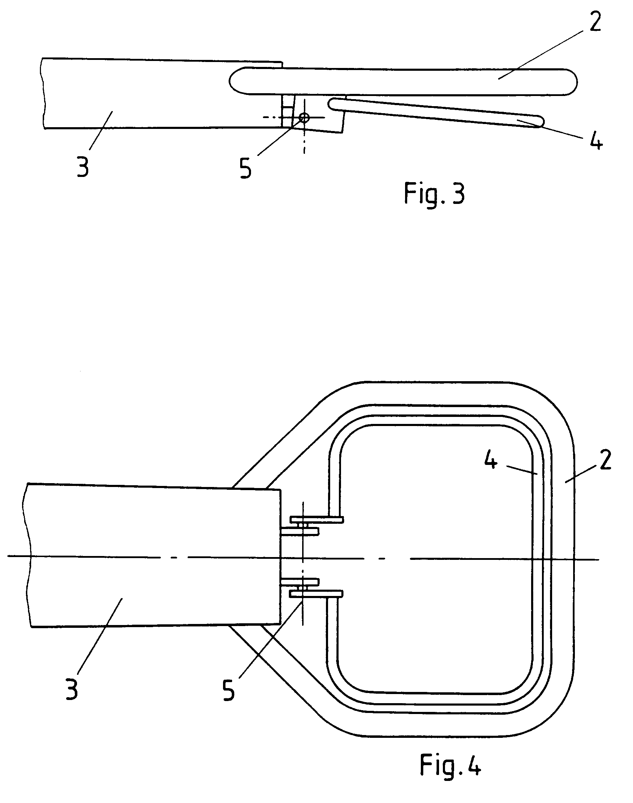

Die Sicherheitsvorrichtung gemäß Fig. 1 bis 4 weist ein Gehäuse 1 auf, das im Bereich eines Führungsbügels 2 an einer Vibrationswalze starr befestigt ist, von der in Fig. 1 außer dem Führungsbügel 2 nur das Ende einer zur manuellen Führung an ihr angebrachten Führungsdeichsel 3 dargestellt ist, an der der Führungsbügel 2 befestigt ist. An der Deichsel 3 ist auch ein Sperrgriff 4 schwenkbar so gelagert, daß er bei fehlender Krafteinwirkung auf ihn bezüglich des Führungsbügels 2 eine Winkelstellung einnimmt, in der sein von der Deichsel 3 abgewendetes Ende 4a eine tiefere Höhenlage einnimmt als der Griffteil 2a des Bügels 2. Wie aus Fig. 4 ersichtlich, befindet sich der Außenumriß des Sperrgriffs 4 innerhalb des Innenumrisses des Führungsbügels 2, und zwar sowohl in einer in Fig. 1 und Fig. 3 zu sehenden Abschaltstellung als auch in allen übrigen Stellungen bis hin zu einer Sperrstellung, in der er sich zum Führungsbügel 2 im wesentlichen parallel erstreckt. Dies erbringt den Vorteil, daß der Bedienungsmann seine Finger nicht zwischen dem Sperrgriff 4 und dem Führungsbügel 2 einquetschen kann. Der Sperrgriff 4 ist um eine Drehachse verschwenkbar. Die Abschaltstellung und die weiteren Stellungen des Sperrgiffs 4 werden weiter unten noch näher erörtert.

Das Gehäuse 1 hat eine Querbohrung 6 und ist so an der Vibrationswalze angebracht, daß sich die Querbohrung 6 oberhalb eines an dem Sperrgriff 4 angebrachten Teils 26 einer weiter unten noch näher erläuterten Sperrvorrichtung befindet.

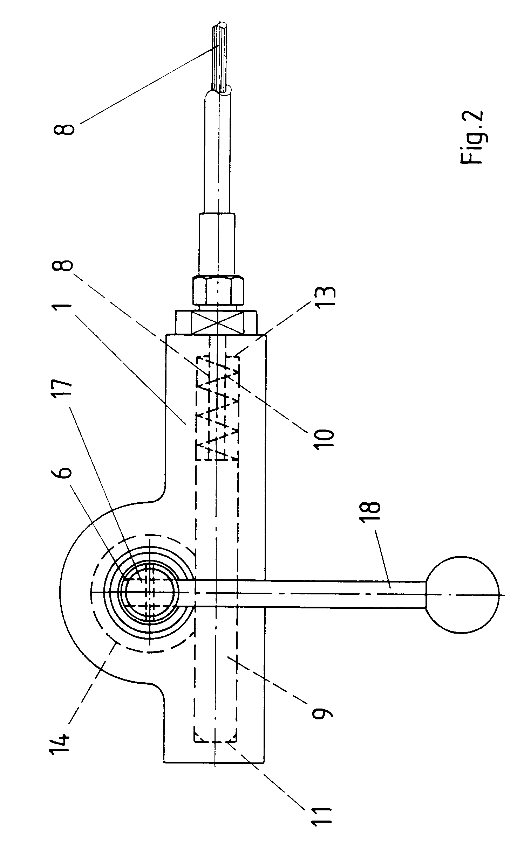

Gemäß Fig.2 erstreckt sich ein zum nicht dargestellten Fahrantrieb, beispielsweise einer Hydropumpe, der Vibrationswalze führender Bowdenzug 8 in das Gehäuse 1. Der Bowdenzug 8 ist fest an einer in dem Gehäuse 1 längsverschiebbar gelagerten, nur schematisch angedeuteten Zahnstange 9 angeschlossen, die durch eine sich zwischen ihr und einer Gehäusefläche 13 abstützende Feder 10 gehäuseeinwärts in eine Endstellung belastet ist, die durch einen gehäusefesten Anschlag 11 festgelegt ist.

Die Zahnstange 9 kämmt mit einem Stirnzahnrad 14, das am gehäuseeinwärtigen Ende einer im bezüglich Fig. 1 unteren Teil der Querbohrung 6 drehbar gelagerten, aus dem Gehäuse 1 nach unten herausragenden Achse 15 sitzt. Am unteren Ende ist stirnseitig an der Achse 15 eine erste Scheibe 25 mit auf der freien Stirnseite koaxial um die Achse 15 angeordneten Zähnen 25a befestigt, deren Zähnen eine zweite Scheibe 26 gegenübersteht, die formschlüssig aber höheneinstellbar mit dem Sperrgriff 4 verbunden ist. Die zweite Scheibe 26 ist auf ihrer den Zähnen 25a zugewendeten Seite mit einem fest mit ihr verbundenen gummielastischen Belag 26a versehen. Das Zahnrad 14 ist zusammen mit der Achse 15 mittels des Sperrhebels 4 in den Grenzen von dessen Bewegungsbereich im Gehäuse 1 hin- und herverschiebbar, und es hat eine solche Höhe, daß es hierbei jederzeit mit der Zahnstange 9 in Eingriff bleibt.

Dem Zahnrad 14 steht darüber ein Drehkopf 16 gegenüber, der fest am unteren Ende einer mit der Achse 15 fluchtenden Welle 17 angebracht ist, die in dem bezüglich Fig. 1 oberen Teil der Querbohrung 6 drehbar gelagert ist und aus dem Gehäuse 1 nach oben vorragt. An der Welle 17 ist außerhalb des Gehäuses ein sich senkrecht zu ihr erstreckender Stellhebel 18 angebracht.

Zwischen dem Drehkopf 16 und dem Zahnrad 14 ist eine Druckfeder 19 angeordnet, die diese Teile in der Achsrichtung der Achse 15 und der Welle 17 auseinander drückt und an gehäusefesten Anschlagflächen 20 in Anlage zu halten trachtet.

Parallel zur Achsrichtung der Welle 17 erstrecken sich von der freien Stirnfläche des Drehkopfes 16 aus zwei Kupplungsstifte 21 zum Zahnrad 14 hin, das mit zwei zu ihnen passenden Sacklöchern 22 versehen ist, in die die Stifte 21 in einer vorbestimmten relativen Winkelstellung zwischen dem Zahnrad 14 und dem Drehkopf 16 einzugreifen vermögen, wenn das Zahnrad 14 mittels des Sperrhebels 4 über die Achse 15 gegen die Kraft der Feder 19 zum Drehkopf 16 hin angehoben wird. Die Anordnung ist so getroffen, daß sich die Stifte 21 gerade außerhalb der Sacklöcher 22 befinden, wenn der Sperrgriff 4 seine in Fig. 1 dargestellte tiefste Stellung, die Abschaltstellung, einnimmt. Das Zahnrad 14 mit den Sacklöchern 22 und der Drehkopf 16 mit den Stiften 21 bilden zusammen eine mittels des Sperrgriffes 4 betätigbare, schaltbare Kupplung, über die der Stellhebel 18 mit der das Stellglied der Vorrichtung bildenden Zahnstange 9 formschlüssig verbunden werden kann. Eine solche Verbindung wird durch Anheben des Sperrgriffes 4 aus der in Fig. 1 und Fig. 3 dargestellten Lage bewerkstelligt, wobei zunächst eine normale Eingriffsstellung für die Folgebewegung zwischen dem Stellhebel 18 und der Zahnstange 9 zustandekommt. Je weiter aber der Sperrgriff 4 angehoben wird, um so stärker werden die Zähne 25a unter dem wachsenden Gegendruck aus der Feder 19 und letztlich aus dem oberen Anschlag 20 an den Belag 26a angepreßt, so daß schließlich der Hebel 18 praktisch gesperrt ist, wenn der Sperrgriff seine oberste Stellung, die Sperrstellung, erreicht hat.
Die Sicherheitsvorrichtung gemäß Fig. 1 bis 4 arbeitet folgendermaßen:

In der in Fig. 1 gezeigten Stellung des Sperrgriffes 4 befindet sich die Zahnstange 9 unter der Wirkung der Feder 10 in ihrer Ausgangsstellung, in der der Bowdenzug 8 den Fahrantrieb ausschaltet. Die Kupplung 24 ist ausgerückt, und der Stellhebel 18 kann bewegt werden, ohne daß das Zahnrad 14 und mit diesem die Zahnstange 9 mitgenommen wird. Wenn nun der Sperrgriff 4 etwas angehoben wird, wird die Kupplung 24 in die normale Eingriffsstellung gebracht, in der der Stellhebel 18 unter Mitnahme des Zahnrades 14 und der Zahnstange 9 stufenlos in jede beliebige, zum Erreichen einer gewünschten Fahrgeschwindigkeit erforderliche Fahrstellung gebracht werden kann. Sobald diese Stellung erreicht ist, hebt der Bedienungsmann den Sperrgriff 4 in seine obere Endstellung, die Sperrstellung, in der die Kupplung 24 gegen Drehung gesperrt ist und sowohl der Stellhebel 18 als auch die Zahnstange 9 in der vorher eingestellten Stellung blockiert sind. Wird nun der Sperrgriff 4 aus irgendeinem Grunde vom Bedienungsmann plötzlich losgelassen, dann gelangt er sofort unter seinem Gewicht und unterstützt durch den von der Feder 19 ausgeübten Druck in seine in Fig. 1 dargestellte Ausgangslage, und gleichzeitig wird die Kupplung 24 ausgekuppelt, so daß die Feder 10 die Zahnstange 9 infolge des nunmehr frei drehbaren Zahnrades 14 in die in Fig. 2 dargestellte gehäuseeinwärtige Endstellung zurückschieben kann, wodurch der Fahrantrieb über den Bowdenzug 8 abgeschaltet wird. Die in Fig. 1 dargestellte Stellung des Sperrgriffes 4 ist somit dessen Abschaltstellung.

Für die fahrtwirksame Bedienung des Stellhebels 8 muß der Bedienungsmann mit dem Sperrgriff 4 erst die normale Eingriffsstellung der Kupplung 24 einstellen, dabei aber darauf achten, daß der Druck zwischen den Zähnen 25a und dem Belag 26a nicht zu groß wird, also nicht fälschlicherweise die Sperrstellung erreicht wird. Dies nimmt ihm praktisch die Möglichkeit, den Sperrgriff 4 einfach am Führungsbügel 2 festzubinden. Es ist für ihn auch nicht atraktiv, eine Festlegung des Sperrgriffs in einer Stellung, in der der normale Eingriff der Kupplung 24 hergestellt ist, zu manipulieren, da in dieser normalen Eingriffsstellung der Kupplung 24 die Feder 10 über die Zahnstange 9 und das Zahnrad 14 ein Drehmoment auf den Hebel 18 ausübt, dem der Bedienungsmann bei entsprechend festgelegtem Sperrgriff 4 dauernd entgegenwirken müßte, während er sonst nach erfolgter Einstellung dieses Drehmoment durch Hochziehen des Sperrgriffes 4 bis zum Bügel 2 in die Sperrstellung leicht außer Wirkung setzen kann.

Durch entsprechende Wahl der von den Federn 10 und 19 ausgehenden Kraft kann leicht erreicht werden, daß es für den Bedienenden weitaus unangenehmer ist, dauernd den Stellhebel 18 gegen ein Drehmoment zu halten, als den Sperrgriff 4 bis in die Sperrstellung anzuheben.

Vorzugsweise wird die Scheibe 25 bezüglich des Sperrgriffs 4 so eingestellt, daß die Zähne 25a und der gummielastische Belag 26a in der Ausschaltstellung des Sperrgriffs 4 einen deutlichen gegenseitigen Abstand haben.

## Patentansprüche

1. Sicherheitsvorrichtung für den Fahrantrieb von Vibrationswalzen, wobei die Sicherheitsvorrichtung einen von Hand bedienbaren Stellhebel (18) für den Fahrantrieb aufweist, der über ein Gestänge oder dgl. auf den Fahrantrieb wirkt, wobei die Sicherheitsvorrichtung den Fahrantrieb zwangsweise abschaltet, wenn sich ein gesonderter Sperrgriff (4) in einer Abschaltstellung befindet, aus der der Sperrgriff (4) vom Bedienungsmann für den Betrieb der Vibrationswalze gegen eine permanente Rückstellkraft in eine anschlagbegrenzte Freistellung verlagerbar ist, und wobei
a) mittels des Stellhebels (18) ein Stellglied (9) betätigbar ist, das permanent an das Gestänge (8) angeschlossen und direkt (10) oder über das letztere in eine der Nullstellung des Fahrantriebs entsprechende Nullstellung belastet ist, und
b) zwischen dem Stellglied (9) und dem Stellhebel (18) eine schaltbare Kupplungsvorrichtung (24) angeordnet ist, die
aa) permanent in eine ausgerückte Stellung belastet (19) ist, in der der Stellhebel (18) ohne Mitnahme des Stellgliedes (9) frei beweglich ist, und
bb) mittels des Sperrgriffs (4) bei dessen Verlagerung aus der Abschaltstellung in die Freistellung der Reihe nach aus der ausgerückten Stellung erst in eine normale Eingriffsstellung für die Folgebewegung von Stellhebel (18) und Stellglied (9) und dann weiter in eine gesperrte Eingriffsstellung einstellbar ist, in der das Stellglied (9) mit dem angekuppelten Stellhebel (18) durch eine in dieser Eingriffsstellung wirksam werdende Blockiervorrichtung mindestens gegen Verlagerung unter den eingebauten Rückstellkräften blockiert ist,
**dadurch gekennzeichnet**, daß die Blockiervorrichtung aus einer mit dem Stellhebel (18) formschlüssig verbinbaren, sich bei dessen Betätigung drehend bewegenden ersten Scheibe (25) mit stirnseitig angeordneten Zähnen (25a) und einer den Zähnen (25a) gegenüberstehenden, formschlüssig mit dem Sperrgriff (4) verbundenen zweiten Scheibe (26) besteht, die auf der den Zähnen (25a) gegenüberstehenden Seite mit einem gummielastischem Belag (26a) versehen ist.

2. Sicherheitsvorrichtung nach Anspruch 1, **dadurch gekennzeichnet**, daß die zweite Scheibe (26) gegenüber dem Sperrgriff (4) einstellbar ist.

3. Sicherheitsvorrichtung nach Anspruch 1 oder 2, **dadurch gekennzeichnet**, daß sich der Sperrgriff (4) mit seinem vom Bedienenden faßbaren Griffteil parallel zu einem Griffteil an der Führungsdeichsel der Walze erstreckt und auch in der Freistellung von diesem Abstand hat.

## Claims

1. A safety device for the travelling gear of vibration rollers, which can, using an adjusting lever (18) by virtue of an operating rod assembly or the like, be operated by hand and is expediently switched off when a separate ratchet lever (4) is located in a switch-off position, from which it can be displaced by the operator, in order for the vibration roller to operate, against a permanent return force into a free position defined by a stop, wherein
a) by means of the adjusting lever (18), an adjusting member (toothed rod 9) can be operated, which is permanently connected to the operating rod assembly (Bowden pull wire 8) and directly (spring 10) or by means of the rod assembly is loaded into a zero position corresponding to the zero position of the travelling gear, and
b) between the adjusting member (9) and the adjusting lever (18) an engaging and disengaging coupling device (24) is disposed, which
aa) is permanently loaded (spring 19) into a disengaged position, in which the adjusting lever (18) is freely movable without entraining the adjusting member (9), and
bb) is adjustable by means of the ratchet lever (4), when this is displaced out of the switch-off position into the free position, sequentially out of the disengaged position firstly into a normal engaged position for the following movement of the adjusting lever (18) and adjusting member (9) and then further into a blocked engaged position, in which the adjusting member (9) is blocked with the coupled adjusting lever (18), at least against displacement caused by the incorporated return forces, by means of a blocking device, which becomes effective in this engaged position,
characterised in that the blocking device consists of a first disk (25) which is connectable in a form locking manner to the adjusting lever (18) and rotates upon actuation thereof, having teeth (25a) disposed on the front face and having a second disk (26) which is opposite the teeth (25a) and connected in a form locking manner to the ratchet lever (4), which second disk is provided with a rubber elastic covering (26a) on the face opposite the teeth (25a).

2. A safety device according to claim 1, characterised in that the second disk (26) is adjustable with respect to the ratchet lever (4).

3. A safety device according to claim 1 or 2, characterised in that the ratchet lever extends with its handle part, which can be gripped by the operator, parallel to a handle part on the guide shaft of the roller and, is also spaced therefrom in the free position.

## Revendications

1. Dispositif de sécurité pour l'entraînement de marche de rouleaux vibreurs, pouvant être commandé manuellement au moyen d'un levier de commande (18) par l'intermédiaire d'une tringlerie de commande ou autre, et qui est débranché de manière forcée quand une poignée de blocage (4) séparée se trouve en une position de débranchement à partir de laquelle cette poignée peut être déplacée par le conducteur pour le fonctionnement du rouleau vibreur contre une force permanente de rappel pour venir en une position libre limitée par une butée, dans lequel :
a) au moyen du levier de commande (18) peut être actionné un organe de commande (crémaillère 9) qui est raccordé en permanence à la tringlerie de commande (câble Bowden 8) et est sollicité directement (ressort 10) ou par l'intermédiaire de ce dernier en une position de repos correspondant à la position de repos de l'entraînement de marche, et
b) entre l'organe de commande (9) et le levier de commande (18) est disposé un dispositif d'embrayage (24) pouvant être embrayé ou débrayé, qui :
aa) est sollicité en permanence (ressort 19) en une position écartée dans laquelle le levier de commande (18) est librement mobile sans entraîner avec lui l'organe de commande (9), et
bb) au moyen de la poignée de blocage (4) lors de son déplacement hors de la position de débranchement pour venir en position libre, vient successivement en quittant sa position écartée, tout d'abord en une position normale d'engrènement pour le mouvement résultant du levier de commande (18) et de l'organe de commande (9) et peut être amené ensuite en une position d'engrènement verrouillée, dans laquelle l'organe de commande (9) est bloqué avec le levier de commande (18) accouplé au moyen d'un dispositif de blocage devenant actif dans cette position d'engrènement, tout au moins contre un déplacement sous l'effet des forces de rappel incorporées,
**caractérisé** en ce que le dispositif de blocage se compose d'un premier disque (25) pouvant être relié solidairement au levier de commande (18) et décrivant un mouvement de rotation quand ce levier est actionné, ce disque portant des dents (25a) sur sa face frontale, et d'un deuxième disque (26) faisant face aux dents (25a) et solidaire de la poignée de blocage (4), qui est muni sur son côté faisant face aux dents (25a) d'un revêtement élastique en caoutchouc.

2. Dispositif de sécurité selon la revendication 1, caractérisé en ce que le deuxième disque (26) est réglable par rapport à la poignée de blocage (4).

3. Dispositif de sécurité selon la revendication 1 ou 2, caractérisé en ce que la poignée de blocage s'étend par sa partie pouvant être prise en main par le conducteur parallèlement à une partie de préhension sur le timon de guidage du rouleau et est également espacée de celle-ci dans la position libre.
